# EUROPÄISCHE PATENTSCHRIFT

(11) **EP 3 428 090 B1**
(45) Veröffentlichungstag und Bekanntmachung des Hinweises auf die Patenterteilung: **14.12.2022**
(21) Anmeldenummer: 18160290.5
(22) Anmeldetag: 06.03.2018
(51) Int. Cl.: B65G 43/10, B65G 47/26

(54) **VERFAHREN UND VORRICHTUNG ZUM UMGANG MIT IN MINDESTENS EINER REIHE BEWEGTEN STÜCKGÜTERN**
DEVICE AND METHOD FOR HANDLING PIECE GOODS MOVED IN AT LEAST ONE ROW
DISPOSITIF ET PROCÉDÉ DE MANIPULATION DES MARCHANDISES EN MOUVEMENT DANS AU MOINS UNE RANGÉE

(30) Priorität: 02.05.2017 DE 102017207353
(43) Veröffentlichungstag der Anmeldung: 16.01.2019
(73) Patentinhaber: KRONES Aktiengesellschaft, 93073 Neutraubling (DE)
(72) Erfinder: GRIMM, Sebastian, 93073 Neutraubling (DE); BEER, Erhard, 93073 Neutraubling (DE); KOLLMUSS, Manuel, 93073 Neutraubling (DE); MEHDI, Arsalan, 93073 Neutraubling (DE); EHBERGER, Marco, 93073 Neutraubling (DE); SCHWALB, Felix, 93073 Neutraubling (DE); ASTNER, Michael, 93073 Neutraubling (DE)
(74) Vertreter: Benninger, Johannes

(56) Entgegenhaltungen:
- EP-A1- 2 749 511

## Beschreibung

Die vorliegende Erfindung betrifft ein Verfahren und eine Vorrichtung zum Umgang mit in mindestens einer Reihe bewegten Stückgütern.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinander gestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder Cluster handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung durch optische Sensoren wie etwa Lichtschranken vorhanden sein kann. Ebenso denkbar ist es, die Stückgüter vereinzelt von dem Transportband durch schrittweises Fahren des Lagenbildungsbandes zu übergeben. Um auf eine solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z. B. Kartons, Schrumpfpacks, Trays und Kunststoffkisten dienen, kennt der Stand der Technik unterschiedliche Ausführungsvarianten. So können etwa Stückgüter zusammengeführt werden, indem sie in eine zweidimensionale Formation (Blockbildung, z. B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein Zyklus, normalerweise jedoch werden mehrere Zyklen benötigt. Die teilweise diskontinuierliche Förderung mit ihren relativ abrupten Geschwindigkeits- bzw. Richtungsänderungen verursacht entsprechend hohe mechanische Belastungen der Stückgüter, was einer produktschonenden Verarbeitung der Stückgüter abträglich sein kann.

Das Dokument EP 1 456 101 A2 offenbart eine Vorrichtung und ein Verfahren zum Umgang mit in mindestens einer Reihe hintereinander bewegten Packgütern, bei welchem Verfahren die Packgüter auf mindestens einer durch wenigstens zwei sich in einer Transportrichtung der Packgüter aneinander anschließenden Transportabschnitte gebildeten Transporteinrichtung zu einem Gebindepalletierer transportiert werden.

Der Gebindepalletierer umfasst mindestens eine Lagenstation und mindestens eine Palletierstation. Die Reihenbildungsvorrichtung umfasst mindestens eine Positionierstation, auf der die Packgüter während des Transports in mindestens einer Reihe mit gewünschten Abständen angeordnet werden. Die Positionierstation ist an einen der Lagenstation zugeordneten Bereitstellungsförderer angeschlossen. Stromaufwärts der Positionierstation ist mindestens ein Stauförderer angeordnet, wobei die Positionierstation mehrere in Transportrichtung hintereinander angeordnete Förderabschnitte mit steuer- und regelbaren Antrieben besitzt. Mit den steuer- und regelbaren Antrieben ist es möglich, eine gewünschte Abstandsbildung der Packgüter zu erzielen. Die Reihenbildungsvorrichtung besitzt mindestens eine Überwachungseinrichtung zur Ermittlung und Überwachung der Abstandsbildung der Packgüter. Der Aufbau dieser bekannten Reihenbildungsvorrichtung ist relativ aufwendig und kompliziert, zumal er eine Vielzahl von Bändern erfordert, die für eine Abstandsbildung und/oder Drehung der Packgüter benötigt werden.

Aus der US 5 123 231 A ist eine Vorrichtung zur Zusammenstellung von Artikeln zu Gruppen und zu deren anschließenden Verpackung bekannt. Auf einem Zuführband werden die Artikel jeweils unter einem vordefinierten Abstand einem Sammelband zugeführt, auf dem die Gruppen aus einer immer gleichen Anzahl von Artikeln zusammengestellt werden. Die Gruppen werden mit einem nachfolgenden Band einer Verpackungseinrichtung zugeführt.

Das Dokument EP 2749511 A1 offenbart eine Einheit zum Bilden einer Schicht von Gruppen von Gegenständen. Die Einheit umfasst einen ersten Förderer, der geeignet ist, eine Vielzahl von Gruppen in einer aneinanderstoßenden Beziehung zu transportieren; und einen zweiten Förderer, der geeignet ist, die Charge von den verbleibenden Gruppen durch einen Spalt zu trennen. Die Einheit umfasst ferner Handhabungsmittel, die geeignet sind, eine abgetrennte Charge auf einem durch den zweiten Förderer definierten Bereich entsprechend zu bearbeiten, um so die Schicht auszubilden.

Das vorrangige Ziel der vorliegenden Erfindung besteht darin, eine exakte und positionsgenaue Verarbeitung und Handhabung von Stückgütern zu ermöglichen, die in mindestens einer Reihe in einer geschlossenen Formation zu einem Verarbeitungsmodul befördert bzw. transportiert werden. Die entsprechende Vorrichtung soll insbesondere in einer Startphase im zeitlichen und/oder prozessbedingten Zusammenhang mit einem Anfahren oder Neubeginn eines Handhabungs- und/oder Positionierungsprozesses der Stückgüter nach einem Stillstand und/oder bei einer Wiederaufnahme eines unterbrochenen Handhabungs- und/oder Positionierungsprozesses die Zuführung der Stückgüter in geschlossener Formation gewährleisten.

Diese Ziele der Erfindung werden mit den Gegenständen der unabhängigen Ansprüche 1 und 6, d.h. mit einem Verfahren und einer Vorrichtung zum Umgang mit in mindestens einer Reihe hintereinander bewegten Stückgütern erreicht, welche die Merkmale der unabhängigen Patentansprüche umfassen. Merkmale vorteilhafter Weiterbildungen der Erfindung ergeben sich aus den jeweiligen abhängigen Ansprüchen.

Die Erfindung bezieht sich auf ein Verfahren und eine Vorrichtung bzw. Handhabungsvorrichtung zum Umgang mit in mindestens einer Reihe hintereinander bewegten Stückgütern. Die Vorrichtung umfasst mindestens eine Transporteinrichtung, auf der Stückgüter einem Verarbeitungsmodul zugeführt werden. Beispielsweise werden die Stückgüter einem Gruppiermodul zugeführt, indem mindestens ein Manipulator zum Handhaben und Positionieren, insbesondere zum Erfassen, Drehen, Verteilen und/oder Gruppieren, mindestens eines zugeführten Stückgutes angeordnet ist. Die Transporteinrichtung umfasst wenigstens zwei sich in einer Transportrichtung aneinander anschließende Transportabschnitte, insbesondere einen ersten Transportabschnitt und einen zweiten Transportabschnitt. Über den zweiten Transportabschnitt werden die Stückgüter direkt dem Verarbeitungsmodul, insbesondere einem Erfassungsbereich des mindestens einen Manipulators des Gruppiermoduls, zuführt.

Bei den Stückgütern kann es sich um in einer Reihe hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung o. dgl. zu einem Gebinde bzw. Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut bilden. Die in Reihe hintereinander bewegten Stückgüter können dabei je nach Anforderung von nachfolgenden Handhabungsvorrichtungen gleich oder unterschiedlich ausgebildet sein.

Im normalen Produktionsbetrieb werden die Stückgüter jeweils ohne Abstände zueinander oder mit minimalen Abständen zwischen den Stückgütern innerhalb der mindestens einen Reihe jeweils als geschlossene Formation auf dem ersten Transportabschnitt der Transporteinrichtung transportiert und lückenlos an den zweiten Transportabschnitt übergeben und dem Verarbeitungsmodul zugeführt. Mit dem Begriff der geschlossenen Formation ist eine weitgehend lückenlose Aufeinanderfolge von Stückgütern gemeint, die hintereinander transportiert werden. Die geschlossene Formation im Sinne der vorliegenden Erfindung kann eine endliche Länge haben und eine begrenzte Zahl von Stückgütern umfassen, wonach eine Lücke und einer solchen Lücke ggf. eine weitere solche Formation folgen kann, die nachfolgend transportiert wird. Eine solche Abfolge kann sich wiederholen, ggf. auch mehrfach, vielfach oder in unbestimmter Zahl. Die geschlossene Formation kann aber auch als Endlos- Formation transportiert werden, die keine Unterbrechung aufweist und eine beliebige Anzahl von Stückgütern umfasst. Aus dieser geschlossenen Formation wird wenigstens ein transportiertes Stückgut klemmend und/oder kraftschlüssig und/oder formschlüssig erfasst, von der geschlossenen Formation räumlich abgetrennt und in eine definierte relative Zielposition und/oder Zielausrichtung gegenüber nachfolgenden Stückgütern der Formation gebracht.

Wird der Produktionsprozess beispielsweise aufgrund eines Fehlers, eines gewünschten Produktwechsels o.ä. unterbrochen, die Vorrichtung ein erstes Mal in Betrieb genommen etc., dann ist es möglich, dass innerhalb des zweiten Transportabschnitts noch einzelne, restliche Stückgüter angeordnet sind, die oftmals zumindest nicht exakt hinsichtlich ihrer Anzahl und/oder Position in einer Weise erfassbar und/oder lokalisierbar sind, dass der Produktionsprozess problemlos anlaufen kann. Da im laufenden Produktionsbetrieb spätestens im Bereich des zweiten Transportabschnitts eine geschlossene Formation der Stückgüter vorliegen muss, um einen fehlerhaften Ablauf des Erfassens von Stückgütern durch den mindestens einen Manipulator zu gewährleisten, ist es unbedingt sinnvoll, den zweiten Transportabschnitt vor dem Start bzw. Neustart leer zu fahren, wobei insbesondere verbliebene Stückgüter in eine geschlossene und lückenlose Formation mit den im ersten Transportabschnitt befindlichen Stückgütern zu bringen sind. Das Verfahren kann somit in einer Startphase eines Produktionsprozesses vorteilhaft eingesetzt werden.

Bei dem hier beschriebenen Verfahren wird innerhalb der Transporteinrichtung eine Anordnung der Stückguter erfasst, insbesondere das Vorhandensein von Stückgütern und/oder das Vorhandensein von Lücken zwischen aufeinanderfolgenden Stückgütern der Reihe innerhalb des ersten Transportabschnitts und/oder innerhalb des zweiten Transportabschnitts. Wird eine Lücke bzw. eine Abwesenheit von Stückgütern erfasst, dann wird der zweite Transportabschnitt zumindest kurzzeitig in einen Reversierbetrieb entgegen der Transportrichtung versetzt, um die Lücke zwischen den Stückgütern zu schließen. Alternativ oder zusätzlich kann der zweite Transportabschnitt zumindest kurzzeitig in einen Reversierbetrieb entgegen der Transportrichtung versetzt werden, um eine Lücke zwischen aufeinanderfolgenden Stückgütern zu detektieren.

Weiterhin kann aber auch notwendig bzw. sinnvoll sein, im laufenden Produktionsprozess die lückenlose Zuführung der Stückgüter mit Hilfe mindestens einer optischen Erfassungseinrichtung zu überwachen und gegebenenfalls korrigierend einzugreifen, um eine korrekte Verarbeitung im nachfolgenden Verarbeitungsmodul zu gewährleisten.

Eine Ausführungsform des Verfahrens sieht zumindest in einer Startphase im zeitlichen und/oder prozessbedingten Zusammenhang mit einem Anfahren oder Neubeginn eines Handhabungs- und/oder Positionierungsprozesses der Stückgüter nach einem Stillstand und/oder bei einer Wiederaufnahme eines unterbrochenen Handhabungs- und/oder Positionierungsprozesses der Stückgüter die folgenden Verfahrensschritte vor: Vor dem Anfahren eines Produktions-, Manipulations-, Positionierungs- und/oder Handhabungsprozesses für die Stückgüter, d.h. bevor diese über die bereits beschriebene Transporteinrichtung dem Verarbeitungsmodul, beispielsweise Gruppiermodul, in geschlossener Formation zugeführt werden, wird zumindest im ersten Transportabschnitt eine Anordnung der Stückgüter erfasst. Dabei wird/werden insbesondere das Vorhandensein von Stückgütern und/oder das Vorhandensein von Lücken zwischen aufeinanderfolgenden Stückgütern der Reihe erfasst. Zusätzlich kann der zweite Transportabschnitt zumindest kurzzeitig in einen Reversierbetrieb entgegen der Transportrichtung versetzt werden, um eine Lücke zwischen aufeinanderfolgenden Stückgütern zu detektieren. Wenn eine Lücke und/oder mindestens ein nicht vorhandenes Stückgut innerhalb des ersten und/oder innerhalb des zweiten Transportabschnittes detektiert wird/werden, dann wird der zweite Transportabschnitt in einem Reversierbetrieb entgegen der Transportrichtung zum Schließen der Lücke(n) betrieben. Nachdem auf diese Weise wieder eine geschlossene Formation der Stückgüter innerhalb der mindestens einen Reihe hergestellt wurde und/oder die Lücken entsprechend beseitigt worden sind, kann der Produktionsbetrieb aufgenommen werden, bei dem der zweite Transportabschnitt mit innerhalb definierbarer Grenzen vorgebbarer Fördergeschwindigkeit in Transportrichtung betrieben wird und die in Reihe bewegten Stückgüter lückenlos in geschlossener Formation zum Verarbeitungsmodul befördert werden.

Gemäß einer Ausführungsform der Erfindung ist vorgesehen, dass der Reversierbetrieb auf einen maximalen Rücklaufweg des zweiten Transportabschnittes begrenzt wird. Der maximale Rücklaufweg wird durch eine Aufnahmekapazität des ersten und/oder des zweiten Transportabschnittes für eine definierte Anzahl von Stückgütern begrenzt. Es kann aber auch gegeben sein, dass der maximale Rücklaufweg durch eine Gesamtlänge an Stückgütern auf dem zweiten Transportabschnitt begrenzt wird. Alternativ kann vorgesehen sein, dass der Reversierbetrieb so lange erfolgt, bis das Obertrum eines den zweiten Transportabschnitt bildenden Förderbandes um eine Förderbandlänge zurückgelaufen ist.

Gemäß einer Ausführungsform der Erfindung ist mindestens in dem ersten Transportabschnitt eine Erfassung der Anordnung der Stückgüter zumindest in einem Übergangsbereich zwischen dem ersten Transportabschnitt und dem zweiten Transportabschnitt und/oder in unmittelbarer Nähe des Übergangsbereichs insbesondere im Bereich des ersten Transportabschnitts vorgesehen. Dies erfolgt vorzugsweise vermittels mindestens einer dem jeweiligen Bereich zugeordneten Erfassungseinrichtung, die insbesondere das Vorhandensein von Stückgütern im ersten Transportabschnitt und/oder auf das Vorhandensein von Lücken zwischen aufeinanderfolgenden Stückgütern der Reihe erfasst. Die Erfassungseinrichtung generiert Sensorsignale und übermittelt diese an eine Steuerungseinrichtung. Wird eine Lücke und/oder das Fehlen von Stückgütern detektiert, dann steuert die Steuerungseinrichtung einen Reversierbetrieb des zweiten Transportabschnitts an, der insbesondere dem Schließen der Lücken und/oder der Übernahme von Stückgütern vom zweiten Transportabschnitt zum ersten Transportabschnitt dient. Dabei wird der zweite Transportabschnitt entgegen der Transportrichtung der Stückgüter im normalen Produktionsbetrieb bewegt, wodurch innerhalb des zweiten Transportabschnitts befindliche Stückgüter zum Schließen der Lücken zum ersten Transportabschnitt hin transportiert werden, um vorzugsweise in eine geschlossene Formation mit den innerhalb des ersten Transportabschnitts angeordneten Stückgütern gebracht zu werden.

Vorzugsweise wird/werden vor dem Auslösen des Reversierbetriebes des zweiten Transportabschnittes der Bestand an Stückgütern auf dem ersten Transportabschnitt und/oder der verfügbare Platz zur Aufnahme der entgegen der Transportrichtung vom zweiten Transportabschnitt zum ersten Transportabschnitt beförderten Stückgüter erfasst. Gemäß einer Ausführungsform der Erfindung wird nach dem Erfassen des verfügbaren oder nicht verfügbaren Platzes entschieden, ob eine Aktivierung des Reversierbetriebes erfolgt. Der Reversierbetrieb des zweiten Transportabschnitts wird beispielsweise nur ausgelöst, wenn die mindestens eine Erfassungseinrichtung ausreichend Platz auf dem ersten Transportabschnitt anzeigt.

Gemäß einer Ausführungsform der Erfindung ist vorgesehen, dass der Reversierbetrieb des zweiten Transportabschnitts nur ausgelöst werden kann, wenn mindestens eine optische Erfassungseinrichtung eine Lücke zwischen Stückgütern auf der Transporteinrichtung anzeigt, beispielsweise wenn mindestens eine von zwei oder mehr Lichtschranken ein "nicht belegt"- Signal ausgibt. Da jedoch auch Situationen denkbar sind, bei denen zwar Lücken zwischen den Stückgütern vorhanden sind, sich die Lücken jedoch gerade nicht im Erfassungsbereich der jeweiligen optischen Erfassungseinrichtung befinden, kann es alternativ sinnvoll sein, kurzzeitig einen Reversierbetrieb des zweiten Transportabschnitts auszulösen, damit gegebenenfalls vorhandene Lücken in den Erfassungsbereich der mindestens einen optischen Erfassungseinrichtung gelangen und somit erfasst werden können.

Nach Übermittlung eines von der Erfassungseinrichtung gelieferten Signals an die Steuerungseinrichtung, das eine weitgehend geschlossene Formation und/oder beseitigte Lücken im Bereich des ersten Transportabschnittes anzeigt, kann nunmehr der Produktionsbetrieb gestartet werden. D.h. der zweite Transportabschnitt wird mit einer innerhalb definierbarer Grenzen vorgebbaren Fördergeschwindigkeit in Transportrichtung betrieben, so dass die in der Reihe auf der Transporteinrichtung angeordneten Stückgüter zum Verarbeitungsmodul bewegt werden.

Gemäß einer Ausführungsform der Erfindung weisen die Transportoberflächen des ersten Transportabschnittes und des zweiten Transportabschnittes jeweils unterschiedliche Haft- und/oder Reibungseigenschaften für die darauf transportierten Stückgüter auf. Insbesondere entstehen zwischen der Transportoberfläche des zweiten Transportabschnittes und den Unterseiten der Stückgüter höhere Haftungs- und/oder Reibwerte als zwischen der Transportoberfläche des ersten Transportabschnittes und den Unterseiten der Stückgüter. So kann beispielsweise der erste Transportabschnitt durch eine Röllchenkette gebildet sein. Auf der Röllchenkette werden die Stückgüter durch den Staudruck der nachfolgenden Stückgüter passiv in Transportrichtung bewegt. Der zweite Transportabschnitt wird vorzugsweise durch ein umlaufendes Endlosfördermittel, insbesondere ein aktiv angetriebenes Förderband o.ä. gebildet. Dieses weist vorzugsweise eine gummierte und/oder zumindest leicht strukturierte und eine relativ hohe Haftung bietende Oberfläche auf, so dass die auf dem Förderband angeordneten Stückgüter nicht oder nur unwesentlich gegeneinander verrutschen können, sondern stattdessen jeweils eine definierte Position relativ zueinander auf dem Förderband einnehmen.

Gemäß einer Ausführungsform der Erfindung ist zumindest in einem Übergangsbereich zwischen dem ersten Transportabschnitt und dem zweiten Transportabschnitt und/oder in unmittelbarer Nähe des Übergangsbereichs und/oder im Bereich des ersten Transportabschnitts und/oder im Bereich des zweiten Transportabschnitts und/oder in einem weiteren Übergangsbereich zwischen dem zweiten Transportabschnitt und dem Verarbeitungsmodul mindestens eine oder jeweils eine optische Erfassungseinrichtung zur Erfassung der Anordnung der Stückguter und/oder zum Erfassen von Lücken zwischen aufeinanderfolgenden Stückgütern im Übergangsbereich und/oder im ersten Transportabschnitt und/oder im zweiten Transportabschnitt angeordnet.

Bei der mindestens einen optischen Erfassungseinrichtung handelt es sich vorzugsweise um eine Lichtschrankeneinheit. Vorzugsweise sind zwei oder drei Lichtschrankeneinheiten vorgesehen, wobei eine erste Lichtschrankeneinheit innerhalb des ersten Transportabschnitts angeordnet ist und eine zweite Lichtschrankeneinheit in Transportrichtung nachgeordnet am Ende des ersten Transportabschnitts angeordnet ist, insbesondere am oder innerhalb des Übergangsbereichs zwischen dem ersten und dem zweiten Transportabschnitt. Eine gegebenenfalls vorhandene weitere dritte Lichtschranke ist beispielsweise dem Übergangsbereich zwischen dem zweiten Transportabschnitt und dem Verarbeitungsmodul, beispielsweise dem Gruppiermodul, zugeordnet.

Weiterhin kann vorgesehen sein, dass mindestens eine Erfassungseinrichtung oder Lichtschrankeneinheit parallel zur Transportrichtung innerhalb eines definierten Verstellweges bewegbar ist, insbesondere eine Bewegung parallel zur oder entgegen der Transportrichtung ausführen kann und dadurch eine Position eines zuvorderst einer Reihe befindlichen Stückgutes und/oder Lücken innerhalb der Reihe detektieren kann.

Alternativ kann die mindestens eine optische Erfassungseinrichtung auch durch eine Kamera o.ä. mit Bilderkennung gebildet werden, die entsprechende Lücken zwischen Stückgütern im ersten und/oder zweiten Transportabschnitt der Transporteinrichtung erkennt und entsprechende Signale an die Steuerungseinrichtung übermittelt. Eine weitere Ausführungsform einer Handhabungsvorrichtung umfasst zwei unterschiedliche optische Erfassungseinrichtungen und kann somit eine Erfassung der Stückgüter durch eine Lichtschranke in einem ersten Bereich der Transporteinrichtung mit einer Erfassung in einem zweiten Bereich durch eine Kamera kombinieren.

Die vom zweiten Transportabschnitt der mindestens einen Transporteinrichtung in den Erfassungsbereich des mindestens einen Manipulators des Verarbeitungsmoduls beförderten Stückgüter werden dort einzeln oder zu mehreren aus der wenigstens einen geschlossenen Formation der mindestens einen Reihe klemmend und/oder kraft- und/oder formschlüssig durch den mindestens einen Manipulator erfasst, von den nachfolgenden Stückgütern der Reihe räumlich abgetrennt und in eine definierte relative Zielposition und/oder -ausrichtung gegenüber nachfolgenden Stückgütern gebracht. Wenn hier, in den Ausführungsbeispielen, in den Ansprüchen und/oder im Zusammenhang mit der gesamten Beschreibungsoffenbarung von einem Umgang mit Stückgütern die Rede ist, so umfasst dies die Handhabung, die Erfassung, die Positionierung, die Bewegung im Raum, die Drehung, Ausrichtung etc., insbesondere im Zusammenhang mit einem Manipulator und/oder beweglichen Teilen des Manipulators, der/die in einem Erfassungsraum bzw. Erfassungsbereich angeordnet ist/sind und sich dort innerhalb von definierbaren Grenzen bewegen können. Allerdings umfasst der Begriff des Umgangs gleichermaßen Positionierungs-, Förder- und/oder alle Arten von Handhabungsschritten, die im Zusammenhang mit Fördereinrichtungen, Horizontalfördereinrichtungen, Transportbändern etc. stattfinden können, die Teil der erfindungsgemäßen Vorrichtung sind und/oder mit dieser in Wirkverbindung und/oder in einer Transportverbindung stehen, seien dies in Transport- und/oder Förderrichtung nachgeordnete, vorgeordnete oder integrierte Teile der erfindungsgemäßen Vorrichtung.

Wenn von einer unveränderten oder neuen Ausrichtung die Rede ist, so ist damit im Zusammenhang mit der vorliegend beschriebenen Vorrichtung insbesondere die winkelige Ausrichtung der zuvor erfassten und vom Manipulator bewegten und/oder verschobenen und/oder gedrehten Stückgüter die Rede. Mit Erfassen ist im vorliegenden Zusammenhang meist das körperliche, formschlüssige und/oder kraftschlüssige und/oder klemmende Greifen eines Stückgutes oder gleichzeitig mehrerer Stückgüter sowie deren bzw. dessen Handhabung bis zur Erreichung der Zielposition und/oder Zielausrichtung gemeint.

Der Manipulator kann beispielsweise als Parallelkinematik- Roboter ausgebildet oder Teil eines solchen sein, insbesondere als Tripod oder Portalroboter, Mehrachsroboter etc. und weist gemäß einer Ausführungsform wenigstens zwei gegenüberliegend, insbesondere paarweise gegenüberliegend angeordnete Klemm- und/oder Greifelemente auf, die insbesondere jeweils paarweise miteinander zusammenwirken. Diese Definition der Klemm- und Greifelemente des Manipulators umfasst bspw. auch Doppelgreifer oder Mehrfachgreifer o. dgl., die mehrere Greifpaare aufweisen können, deren Greifpaare jedoch insbesondere paarweise zusammenwirken, um bspw. Stückgütern in mehreren parallelen, insbesondere voneinander beabstandeten Reihen aufnehmen, erfassen und/oder greifen zu können. Es sei somit festgehalten, dass die Zahl von wenigstens zwei gegenüberliegend angeordneten Klemm- und/oder Greifelementen ein Minimum definiert. Der Manipulator weist somit gemäß einer Ausführungsform mindestens einen Greiferkopf mit starren, beweglichen und/oder gegeneinander zustellbaren Klemmbacken auf, zwischen denen das mindestens eine Stückgut geklemmt und dadurch entsprechend zur Zielposition bewegt werden kann.

Mit dem mindestens einen Manipulator können bevorzugt eine Mehrzahl an hintereinander bewegten Stückgütern als palettierfähigen Lage oder Teillage zusammengestellt werden. Alternativ und/oder zusätzlich kann der mindestens eine Manipulator des Verarbeitungsmoduls auch als Dreh- und Verteilsystem für Stückgüter verwendet werden, ohne dabei eine definierte relative Anordnung der Stückgüter zur Vorbereitung einer palettierfähigen Lage oder Teillage herzustellen. Die derart gedrehten und/oder verteilten Stückgüter werden anschließend über geeignete Fördersysteme o.ä. einer weiteren Verarbeitung zugeführt.

Abschließend wird darauf hingewiesen, dass Aspekte von Abwandlungen der zuvor anhand von zahlreichen Ausführungsvarianten beschriebenen erfindungsgemäßen Vorrichtung gleichermaßen auf das ebenfalls zuvor anhand von zahlreichen Ausführungsvarianten beschriebene erfindungsgemäße Verfahren bzw. auf eine der Ausführungsvarianten oder auch auf Kombinationen mehrerer dieser Ausführungsvarianten zu lesen sein können. Damit haben alle diese der Vorrichtung zugeordneten Aspekte, Abwandlungen und Varianten gleichermaßen als für die Verfahrensvarianten offenbarte Aspekte, Abwandlungen, Varianten und/oder Erfindungsdetails zu gelten. Umgekehrt gilt in gleicher Weise, dass Aspekte von Abwandlungen des zuvor anhand von zahlreichen Ausführungsvarianten beschriebenen erfindungsgemäßen Verfahrens gleichermaßen auf die ebenfalls zuvor anhand von zahlreichen Ausführungsvarianten beschriebene erfindungsgemäße Vorrichtung bzw. auf eine der Ausführungsvarianten oder auch auf Kombinationen mehrerer dieser Ausführungsvarianten zu lesen sein können. Damit haben alle diese dem Verfahren zugeordneten Aspekte, Abwandlungen und Varianten gleichermaßen als für die Vorrichtungsvarianten offenbarte Aspekte, Abwandlungen, Varianten und/oder Erfindungsdetails zu gelten.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine Handhabungsvorrichtung zum Umgang mit in mindestens einer Reihe bewegten Stückgütern in einer ersten Arbeitsposition.
Fig. 2 zeigt eine Handhabungsvorrichtung gemäß Fig. 1 in einer zweiten Arbeitsposition.
Figuren 3 bis 7 zeigen verschiedene mögliche Anordnungen von Stückgütern innerhalb einer Handhabungsvorrichtung gemäß Fig. 1.
Fig. 7 zeigt eine zweite Ausführungsform einer Handhabungsvorrichtung zum Umgang mit in mindestens einer Reihe bewegten Stückgütern.
Fig. 8 zeigt eine dritte Ausführungsform einer Handhabungsvorrichtung zum Umgang mit in mindestens einer Reihe bewegten Stückgütern.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

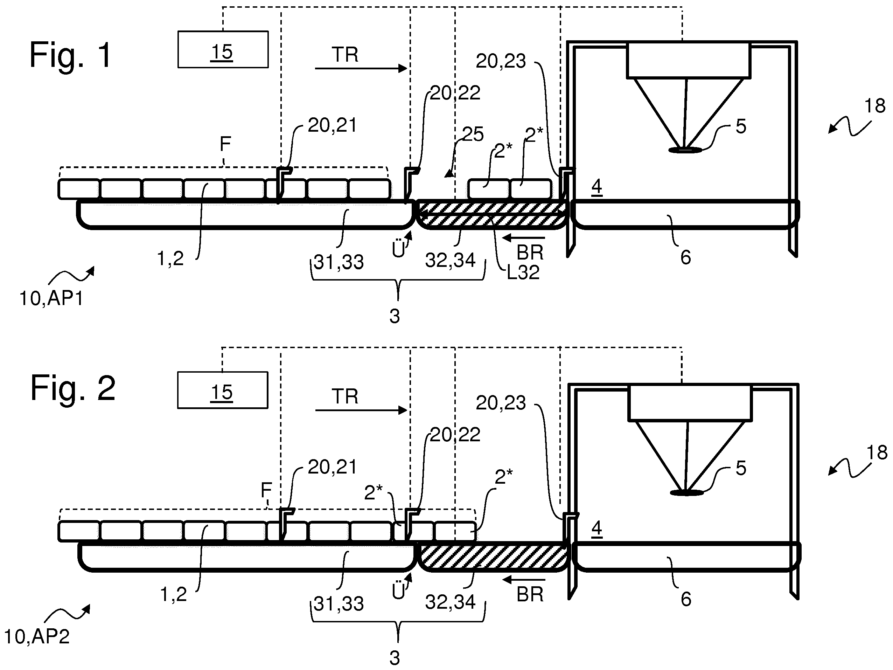

Die schematische Seitenansicht der Fig. 1 zeigt eine Handhabungsvorrichtung 10 zum Umgang mit in mindestens einer Reihe 1 bewegten Stückgütern 2 in einer ersten Arbeitsposition AP1 und Fig. 2 zeigt die Handhabungsvorrichtung 10 gemäß Fig. 1 in einer zweiten Arbeitsposition AP2. Die Stückgüter 2 werden innerhalb der Reihe 1 vorzugsweise als geschlossene Formation F in Transportrichtung TR zu einem Gruppiermodul 18 mit mindestens einem Manipulator 5 transportiert.

Das Gruppiermodul 18 umfasst weiterhin eine Horizontalfördereinrichtung 6, auf der nicht durch den Manipulator 5 erfasste Stückgüter 2 in Transportrichtung TR weitergeführt werden. Der Manipulator 5 ist vorzugsweise oberhalb einer durch die Horizontalfördereinrichtung 6 gebildeten horizontalen Transportebene für die Stückgüter 2 angeordnet. Zur Erklärung der Funktionsweise einer Ausführungsform eines Manipulators 5 wird auf die Anmeldung mit dem Aktenzeichen DE 10 2016 206 639 verwiesen.

Die Stückgüter 2 werden auf mindestens einer Transporteinrichtung 3 in den Erfassungsbereich 4 des Manipulators 5 bewegt, wobei die Transporteinrichtung 3 durch wenigstens zwei sich aneinander anschließende Transportabschnitte 31, 32 gebildet wird. Der erste Transportabschnitt 31 wird vorzugsweise durch eine Röllchenkette 33 gebildet, auf der die vorderen Stückgüter 2 aufgrund des Staudrucks der nachlaufenden Stückgüter 2 in Transportrichtung TR geschoben werden. Der zweite, in Transportrichtung TR nachfolgende Transportabschnitt 32 wird vorzugsweise durch ein aktiv angetriebenes Endlosfördermittel, insbesondere ein Förderband 34 mit einer gummierten Transportfläche gebildet, das in einem laufenden Produktionsbetrieb in einer Transportgeschwindigkeit bewegt wird, die in der Regel einer Geschwindigkeit des Horizontalfördermittels 6 des Gruppiermoduls 18 entspricht.

Die Stückgüter 2 werden im laufenden Produktionsbetrieb auf dem ersten Transportabschnitt 31 innerhalb der Reihe 1 zumindest abschnittsweise und/oder innerhalb von Gruppen mehrerer aufeinanderfolgender Stückgüter 2 ohne Abstände oder mit minimalen Abständen unmittelbar aufeinanderfolgend als geschlossene Formation F in Transportrichtung TR bewegt und an den sich daran anschließenden zweiten Transportabschnitt 32 übergeben.

Die Fig. 1 zeigt insbesondere eine beispielhafte Momentaufnahme einer Vorrichtung 10 in einer ersten Arbeitsposition AP1 nach einem Produktionsstopp. Bei Wiederaufnahme des Verfahrens nach einem Produktionsstopp, beispielsweise aufgrund eines Sortenwechsels, d.h., bei Umstellung auf andere Stückgüter, beim Reset (d.h. bei einer Zurücksetzung von Steuerungsparametern für einen anschließenden Neustart) der Vorrichtung 10 oder beim Neustart der Vorrichtung 10, d.h. insbesondere im zeitlichen und/oder prozessbedingten Zusammenhang mit einem Anfahren oder Neubeginn eines Handhabungs- und/oder Positionierungsprozesses und/oder bei einer Wiederaufnahme eines unterbrochenen Handhabungs- und/oder Positionierungsprozesses, muss gewährleistet werden, dass die über den zweiten Transportabschnitt 32 in das Gruppiermodul 18 einlaufenden Stückgüter 2 lückenlos als geschlossene Formation F bewegt werden. Aus diesem Grund ist es notwendig, gegebenenfalls auf dem zweiten Transportabschnitt 32 angeordnete einzelne Stückgüter 2*, die wie in Fig. 1 dargestellt, von den nachfolgenden, insbesondere innerhalb des ersten Transportabschnitts 31 angeordneten Stückgütern 2 der Reihe 1 durch eine Lücke 25 beabstandet sind, vor der Wiederaufnahme des Verfahrens entgegen der Transportrichtung TR zu bewegen, bis diese zusammen mit den nachfolgenden Stückgütern 2 auf dem ersten Transportabschnitt 31 eine geschlossene Formation F bilden. Fig. 2 stellt insbesondere eine zweite Arbeitsposition AP2 dar, nachdem die auf dem zweiten Transportabschnitt 32 angeordneten Stückgüter 2* durch einen Reversierbetrieb des zweiten Transportabschnitts 32 entgegen der Transportrichtung TR in Richtung des ersten Transportabschnitts 31 bewegt worden sind.

Dem ersten Transportabschnitt 31 sind mindestens zwei Sensoren 20 zugeordnet, insbesondere eine erste Lichtschranke 21 in einem in Transportrichtung TR hinteren Bereich des ersten Transportabschnitts 31 und eine zweite Lichtschranke 22 im Übergangsbereich Ü zwischen dem ersten Transportabschnitt 31 und dem zweiten Transportabschnitt 32 oder am ersten Transportabschnitt 31 in der Nähe des Übergangsbereichs Ü. Gegebenenfalls kann noch eine weitere dritte Lichtschranke 23 in einem Übergangsbereich zwischen dem zweiten Transportabschnitt 32 und dem Gruppiermodul 18 angeordnet sein.

Vermittels der ersten und zweiten Lichtschranke 21, 22 wird detektiert, ob der erste Transportabschnitt 31 vollständig beladen ist. Sollte eine der beiden Lichtschranken 21, 22 nicht belegt sein, dann ist dies ein Signal dafür, dass Lücken 25 vorhanden sind, bzw. dass auf der Röllchenkette 33 noch Platz vorhanden ist. In diesem Fall wird ein Reversierbetrieb des zweiten Transportabschnitts 32 ausgelöst. D.h., es wird eine Bewegung der Transportfläche des zweiten Transportabschnitts 32 in einer Bewegungsrichtung BR ausgelöst, wobei die Bewegungsrichtung BR entgegengesetzt zu der normalen Transportrichtung TR ist. Diese Bewegung wird gestoppt, wenn beide Lichtschranken 21, 22 jeweils an die Steuerungseinrichtung 15 das Signal "belegt" übermitteln. Alternativ wir die Bewegung gestoppt, wenn der zweite Transportabschnitt 32 um eine gesamte Länge L32 zurückbewegt worden ist. Die Zeit, die dafür benötigt wird, wird beispielsweise durch die Steuerungseinrichtung 15 anhand der Geschwindigkeit des zweiten Transportabschnitts 32 im Reversierbetrieb und der Länge L32 des zweiten Transportabschnitts 32 berechnet.

Durch den Reversierbetrieb wird sichergestellt, dass noch innerhalb des zweiten Transportabschnitts 32 angeordnete Rest- Stückgüter 2* zusammen mit den nachfolgenden Stückgütern 2 eine geschlossene Formation F bilden, so dass die Stückgüter 2, 2* im Produktionsbetrieb über den zweiten Transportabschnitt 32 lückenlos dem Gruppiermodul 18 zugeführt werden.

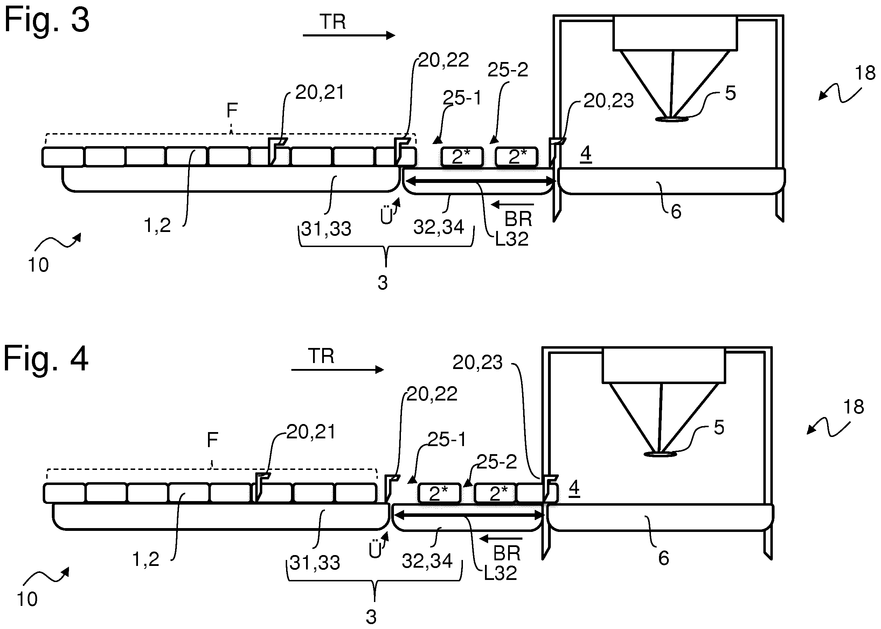

Die schematischen Seitenansichten der Figuren 3 bis 6 zeigen verschiedene mögliche Anordnungen von Stückgütern 2, 2* innerhalb einer Handhabungsvorrichtung gemäß Fig. 1 und beschreibt deren Erkennung und Beseitigung. Zur besseren Übersichtlichkeit wurde hierbei jeweils die Steuerungseinrichtung 15 (vergleiche Figuren 1 und 2) nicht dargestellt. Gemäß Fig. 3 sind die Stückgüter 2 innerhalb des ersten Transportabschnitts 31 als geschlossene Formation F angeordnet. Innerhalb des zweiten Transportabschnitts 32 sind weitere Stückgüter 2* angeordnet, die jedoch durch eine Lücke 25-1 beabstandet zu den Stückgütern 2 der Formation F angeordnet sind. Weiterhin ist zwischen den auf dem zweiten Transportabschnitt 32 angeordneten Stückgütern 2* eine zweite Lücke 25-2 ausgebildet. Sowohl im Bereich der ersten Lichtschranke 21 als auch im Bereich der zweiten Lichtschranke 22 sind Stückgüter 2 angeordnet, so dass diese jeweils ein entsprechendes "belegt" Signal an die Steuerungseinrichtung (vergleiche Figuren 1 und 2) übermitteln. Im Bereich der dritten Lichtschranke 23 sind jedoch keine Stückgüter 2, 2* angeordnet, so dass ein entsprechendes Signal generiert und an die Steuerungseinrichtung (nicht dargestellt) übermittelt wird, die daraufhin einen Reversierbetrieb des zweiten Transportabschnitts 32 zum Schließen der Lücken 25-1, 25-2 ansteuert.

Die schematische Seitenansicht der Fig. 4 zeigt ein Ausführungsbeispiel, bei der die auf dem ersten Transportabschnitt 31 in Formation F einlaufenden Stückgüter 2 im Bereich der zweiten Lichtschranke 22 eine erste Lücke 25-1 zu den auf dem zweiten Transportabschnitt 32 angeordneten Stückgütern 2* aufweisen. Weiterhin ist zwischen den auf dem zweiten Transportabschnitt 32 angeordneten Stückgütern 2* eine zweite Lücke 25-2 ausgebildet. In diesem Fall sind sowohl im Bereich der ersten Lichtschranke 21 als auch im Bereich der dritten Lichtschranke 23 Stückgüter 2, 2* angeordnet, so dass diese jeweils ein entsprechendes "belegt" Signal an die Steuerungseinrichtung (vergleiche Figuren 1 und 2) übermitteln. Im Bereich der zweiten Lichtschranke 22 sind jedoch keine Stückgüter 2, 2* angeordnet, so dass ein entsprechendes Signal generiert und an die Steuerungseinrichtung (nicht dargestellt) übermittelt wird, die daraufhin einen Reversierbetrieb des zweiten Transportabschnitts 32 zum Schließen der Lücken 25-1, 25-2 ansteuert.

Gemäß einer weiteren nicht dargestellten Ausführungsform ist eine Situation denkbar, bei der die Stückgüter 2 der Reihe 1 auf dem ersten Transportabschnitt 31 zwar bis in einen Bereich zwischen der ersten und zweien Lichtschranke 21, 22 hineinreichen und weitere einzelne Stückgüter 2* beispielsweise im zweiten Transportabschnitt 32 angeordnet sind. Durch den Reversierbetrieb des zweitem Transportabschnitts, der aufgrund des "nicht belegt" Signals der zweiten Lichtschranke 22 ausgelöst wird, werden Stückgüter 2 auf dem zweiten Transportabschnitt 32 nur bis zu dem Übergangsbereich Ü zwischen dem ersten und zweiten Transportabschnitt 31, 32 transportiert, und dann nur noch teilweise auf den ersten Transportabschnitt 31 übergeschoben, abhängig davon, wieviele Stückgüter 2* auf dem zweiten Transportabschnitt 32 angeordnet waren. In diesem Fall senden beide Lichtschranken 21, 22 ein "belegt" Signal, obwohl auf der Röllchenkette 33 weiterhin eine Lücke 25 ausgebildet ist.

Wenn nunmehr eine Zufuhr von Stückgütern 2 von einem vorausgehenden Prozess, insbesondere von einer Verpackungsmaschine, über die Transporteinrichtung 3 erfolgt, wobei die Stückgüter 2 aufgrund des Staudrucks der nachfolgenden Stückgüter 2 passiv über die Röllchenkette 33 des ersten Transportabschnitts 31 bewegt werden, hebt sich die Lücke 25 auf der Röllchenbandkette 33 selbst auf. Wird im Laufe des Anfahrens oder der Produktion trotzdem eine Lücke 25 entdeckt, beispielsweise durch den zweiten und/oder den dritten Lichtsensor 22, 23, so kann eine Fehlermeldung ausgegeben werden und/oder die Lücke 25 durch einen kurzzeitigen Reversierbetrieb des zweiten Transportabschnitts 32 geschlossen werden.

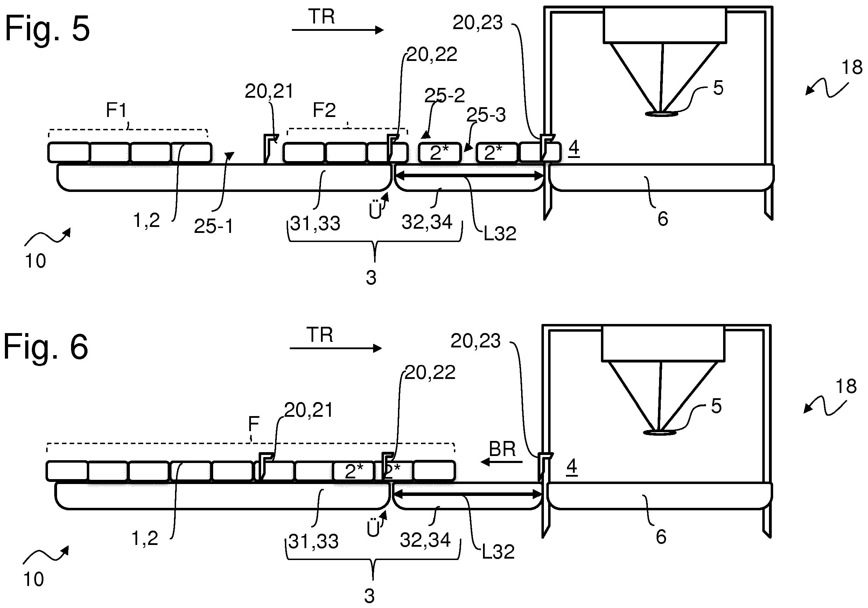

Die schematische Seitenansicht der Fig. 5 zeigt eine Handhabungsvorrichtung 10 in einer Situation, bei der bereits eine erste Lücke 25-1 zwischen den Stückgütern 2 innerhalb des ersten Transportabschnitts 31 ausgebildet ist, so dass insbesondere eine erste Formation F1 an Stückgüter 2 und eine zweite Formation F2 an Stückgütern 2 ausgebildet ist. Weiterhin ist zwischen dem in Transportrichtung TR zuvorderst angeordneten Stückgut 2 der Formation F2 und dem auf dem zweiten Transportabschnitt 32 benachbarten Stückgut 2* eine zweite Lücke 25-2 und nachfolgend noch eine dritte Lücke 25-3 ausgebildet. In diesem Fall sind sowohl im Bereich der zweiten Lichtschranke 22 als auch im Bereich der dritten Lichtschranke 23 Stückgüter 2, 2* angeordnet, so dass diese jeweils ein entsprechendes "belegt" Signal an die Steuerungseinrichtung (vergleiche Figuren 1 und 2) übermitteln. Im Bereich der ersten Lichtschranke 21 sind jedoch keine Stückgüter 2, 2* angeordnet, so dass ein entsprechendes Signal generiert und an die Steuerungseinrichtung (nicht dargestellt) übermittelt wird, die daraufhin einen Reversierbetrieb des zweiten Transportabschnitts 32 zum Schließen der Lücken 25-1, 25-2, 25-3 ansteuert.

Dadurch werden, wie in Fig. 6 dargestellt, die Stückgüter 2* vom zweiten Transportabschnitt 32 in Richtung des ersten Transportabschnitts 31 bewegt und zumindest teilweise auf den ersten Transportabschnitt 31 übergeschoben. Solange zumindest eines der Stückgüter 2* noch zumindest teilweise auf dem Förderband 34 des zweiten Transportabschnitts 32 angeordnet ist, bewirkt dieses einen Druck auf die kontaktierten und auf dem ersten Transportabschnitt 31 angeordneten Stückgüter 2, 2*, die dadurch auf der den ersten Transportabschnitt 31 bildendenden Röllchenkette 33 entgegen der Transportrichtung TR verschoben werden, um die Lücke 25-1 im Bereich der ersten Lichtschranke 21 zu schließen. Die Stückgüter 2 der beiden Formationen F1 und F2 gemäß Fig. 6 werden somit zu einer gemeinsamen Formation F zusammengeschoben.

Der Abstand zwischen der ersten und der zweiten Lichtschranke 21, 22 beträgt gemäß einer bevorzugten Ausführungsform der Erfindung maximal der Länge L32 des zweiten Transportabschnitts 32. Vorzugsweise ist der Abstand zwischen der ersten und der zweiten Lichtschranke 21, 22 geringer als die Länge L32 des zweiten Transportabschnitts 32, insbesondere liegt der Abstand zwischen 50% - 95% der Länge L32 des zweiten Transportabschnitts 32.

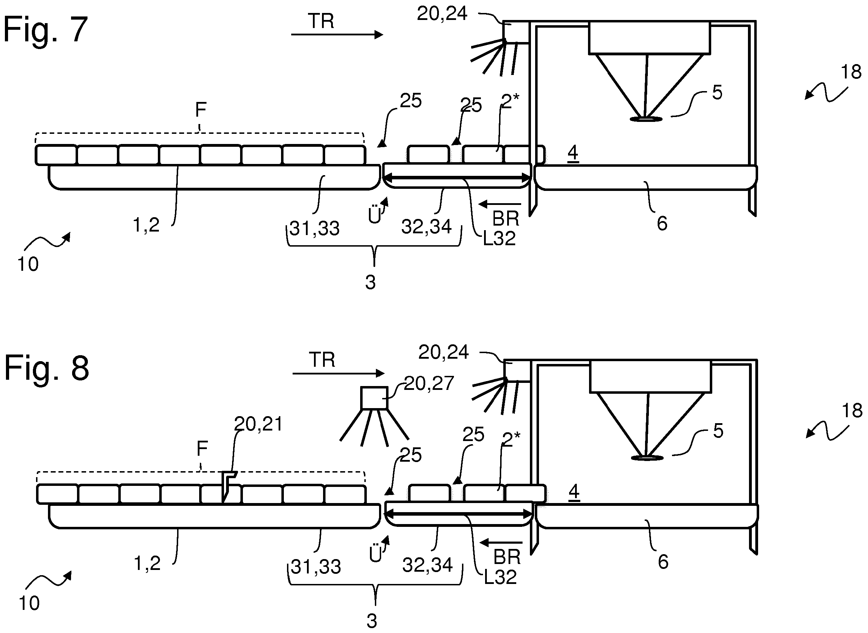

Die schematische Seitenansicht der Fig. 7 zeigt eine zweite Ausführungsform einer Handhabungsvorrichtung 10 zum Umgang mit in mindestens einer Reihe 1 bewegten Stückgütern 2 und Fig. 8 zeigt eine dritte Ausführungsform. Bei beiden Ausführungsformen ist für die Erkennung von Lücken 25 mindestens ein Sensor 20 in Form einer Kamera 24 mit Bilderkennung am Gruppiermodul 18 angeordnet. Diese erfasst zumindest teilweise den zweiten Transportabschnitt 32 und erkennt Lücken 25 zwischen den auf dem zweiten Transportabschnitt 32 angeordneten Stückgütern 2. Eine solche Kamera 24 kann gemäß dem in Fig. 8 dargestellten dritten Ausführungsbeispiel mit weiteren Kameras und/oder Lichtschranken im Bereich des ersten und/oder zweiten Transportabschnitts 31, 32 kombiniert werden. Beispielsweise kann eine Lichtschranke 21 im Bereich des ersten Transportabschnitts 31 und eine zweite Kamera 27 mit Bilderkennung im Übergangsbereich Ü zwischen dem ersten und dem zweiten Transportabschnitt 31, 32 angeordnet und jeweils mit der Steuerungseinheit (nicht dargestellt, vergleiche Figuren 1 und 2) gekoppelt sein.

Gemäß einer nicht dargestellten Ausführungsform kann es vorkommen, dass das zuvorderst angeordnete Stückgut 2 der zuführenden Reihe 1 in Transportrichtung TR vor der ersten optischen Erfassungseinrichtung 20 im Bereich des ersten Transportabschnitts 31 angeordnet ist, d.h., die Reihe 1 der Stückgüter 2 erstreckt sich beispielsweise nach einem Produktionsstopp nicht bis in den zweiten Transportabschnitt 32 hinein. Die mindestens eine optische Erfassungseinrichtung 20 im Bereich des ersten Transportabschnitts 31 und ggfl. in Transportrichtung TR nachgeordnete weitere Erfassungseinrichtungen 20 geben in diesem Fall jeweils ein "nicht belegt" Signal aus. Da aber trotzdem die Möglichkeit besteht, dass einzelne Stückgüter 2 in einem in Transportrichtung TR nachgeordneten Bereich und/oder innerhalb des zweiten Transportabschnitts 32 auf der Transporteinrichtung 3 angeordnet sind, wird in diesem Fall ebenfalls aufgrund der "nicht belegt" Signale der optischen Erfassungseinrichtung(en) 20 ein Reversierbetrieb des zweiten Transportabschnitts 32 durchgeführt, wobei das Obertrum des zweiten Transportabschnitts 32 mindestens einmal zurückgeführt wird, d.h. mindestens um eine Länge L32 des zweiten Transportabschnitts. Anschließend wird mit der Zufuhr an Stückgütern 2 von einem vorherigen Prozess, insbesondere von einer Verpackungsmaschine, über die Transporteinrichtung 3 begonnen. Die Stückgüter 2 werden aufgrund des Staudrucks der nachfolgenden Stückgüter 2 passiv über die Röllchenkette 33 des ersten Transportabschnitts 31 bewegt. Spätestens wenn eine Erfassungseinrichtung 20 im Übergangsbereich Ü zwischen dem ersten und dem zweiten Transportabschnitt 31, 32 das Vorhandensein von Stückgütern 2 detektiert, wird der zweite Transportabschnitt 32 aktiviert und in Transportrichtung TR bewegt.

### Bezuaszeichenliste

- 1: Reihe
- 2, 2*: Stückgut
- 3: Transporteinrichtung
- 4: Erfassungsbereich
- 5: Manipulator
- 6: Horizontalfördereinrichtung
- 10: Handhabungsvorrichtung
- 15: Steuerungseinrichtung
- 18: Gruppiermodul
- 20: Sensor
- 21: erste Lichtschranke
- 22: zweite Lichtschranke
- 23: dritte Lichtschranke
- 24: Kamera
- 25, 25-1, 25-2, 25-3: Lücke
- 27: Kamera
- 31: erster Transportabschnitt
- 32: zweiter Transportabschnitt
- 33: Röllchenkette
- 34: Förderband
- AP1 / AP2: erste / zweite Arbeitsposition
- BR: Bewegungsrichtung im Reversierbetrieb
- F, F1, F2: Formation
- L32: Länge
- TR: Transportrichtung
- Ü: Übergangsbereich

## Patentansprüche

1. Verfahren zum Umgang mit in mindestens einer Reihe (1) hintereinander bewegten Stückgütern (2), bei welchem Verfahren:
- die Stückgüter (2) auf mindestens einer durch wenigstens zwei sich in einer Transportrichtung (TR) der Stückgüter (2) aneinander anschließenden Transportabschnitte (31, 32) gebildeten Transporteinrichtung (3) zu einem Verarbeitungsmodul (18) transportiert werden,
- wobei die Stückgüter (2) im normalen Produktionsbetrieb innerhalb einer Reihe (1) ohne Abstände oder mit minimalen Abständen unmittelbar aufeinanderfolgend als geschlossene Formation (F) auf dem ersten Transportabschnitt (31) und dem zweiten Transportabschnitt (32) der Transporteinrichtung (3) transportiert und an das sich daran anschließende Verarbeitungsmodul (18) als geschlossene Formation (F) übergeben werden,
- wobei in einer Startphase vor Beginn des normalen Produktionsbetriebs innerhalb der Transporteinrichtung (3) eine Anordnung der Stückguter (2) durch mindestens eine dem ersten Transportabschnitt (31) zugeordnete Erfassungseinrichtung (20) erfasst wird, wobei die mindestens eine Erfassungseinrichtung (20) Sensorsignale generiert und an eine Steuerungseinrichtung (15) übermittelt,
- wobei nach Detektion einer Lücke (25) zwischen aufeinanderfolgenden Stückgütern (2) der Reihe (1) im ersten Transportabschnitt (31) durch die mindestens eine Erfassungseinrichtung (20) der zweite Transportabschnitt (32) durch die Steuerungseinrichtung (15) zumindest kurzzeitig in einem Reversierbetrieb entgegen der Transportrichtung (TR) betrieben wird, bis die mindestens eine Erfassungseinrichtung (20) das Signal, dass die Lücke (25) geschlossen ist, an die Steuerungseinrichtung (15) übermittelt und/oder bis der zweite Transportabschnitt (32) um die gesamte Förderlänge (L32) des zweiten Transportabschnitts (32) zurückbewegt worden ist.

2. Verfahren nach Anspruch 1, bei dem zumindest in einem Übergangsbereich (Ü) zwischen erstem Transportabschnitt (31) und zweitem Transportabschnitt (32) und/oder in unmittelbarer Nähe des Übergangsbereichs (Ü), insbesondere im Bereich des ersten Transportabschnittes (31), und/oder im Bereich des zweiten Transportabschnittes (32), eine Anordnung der Stückguter (2) durch mindesten eine oder jeweils eine Erfassungseinrichtung (20) erfasst wird, wobei insbesondere das Vorhandensein von Stückgütern (2) im Übergangsbereich (Ü) und/oder im ersten Transportabschnitt (31) und/oder das Vorhandensein von Lücken (25) zwischen aufeinanderfolgenden Stückgütern (2) der Reihe (1) erfasst wird.

3. Verfahren nach einem der voranstehenden Ansprüche, bei dem die mindestens eine Erfassungseinrichtung (20) oder die Erfassungseinrichtungen (20) durch optische Erfassungseinrichtungen (20), insbesondere mittels Lichtschrankeneinheiten (21, 22, 23) und/oder mittel Kameras (24, 27) mit Bilderkennungsfunktion, gebildet sind.

4. Verfahren nach Anspruch 3, bei dem zumindest eine der optischen Erfassungseinrichtungen oder der Lichtschrankeneinheiten parallel zur Transportrichtung (TR) innerhalb eines definierten Verstellweges bewegbar ist und durch Bewegen parallel zur oder entgegen der Transportrichtung (TR) eine Position eines zuvorderst einer Reihe (1) befindlichen Stückgutes (2) und/oder Lücken (25) innerhalb der Reihe (1) detektiert.

5. Verfahren nach einem der voranstehenden Ansprüche, bei dem die vom zweiten Transportabschnitt (32) der mindestens einen Transporteinrichtung (3) in einen Erfassungsbereich (4) des Gruppiermoduls (18) beförderten Stückgüter (2) dort einzeln oder zu mehreren aus der wenigstens einen geschlossenen Formation (F) der mindestens einen Reihe (1) durch den mindestens einen Manipulator (5) klemmend und/oder kraft- und/oder formschlüssig erfasst, von den nachfolgenden Stückgütern (2) der Reihe (1) räumlich abgetrennt und in eine definierte relative Zielposition und/oder -ausrichtung gegenüber nachfolgenden Stückgütern (2) der Reihe (1) gebracht werden.

6. Vorrichtung (10) zum Umgang mit in mindestens einer Reihe (1) hintereinander bewegten Stückgütern (2) umfassend:
- mindestens eine durch wenigstens zwei sich in einer Transportrichtung (TR) aneinander anschließende Transportabschnitte (31, 32) gebildete Transporteinrichtung (3) zur Beförderung der in Reihe (1) hintereinander laufenden Stückgüter (2) zu einem Verarbeitungsmodul,
- mindestens eine dem ersten Transportabschnitt (31) zugeordnete Erfassungseinrichtung (20) zur Detektion einer Anordnung der Stückguter (2) auf das Vorhandensein von Lücken (25) zwischen aufeinanderfolgenden Stückgütern (2) der Reihe (1), wobei die Erfassungseinrichtung (20) Sensorsignale generiert und an eine Steuerungseinrichtung (15) übermittelt, wobei die Stückgüter (2) im normalen Produktionsbetrieb innerhalb einer Reihe (1) ohne Abstände oder mit minimalen Abständen unmittelbar aufeinanderfolgend als geschlossene Formation (F) auf dem ersten Transportabschnitt (31) und dem zweiten Transportabschnitt (32) der Transporteinrichtung (3) transportiert und an das sich daran anschließenden Verarbeitungsmodul (18) als geschlossene Formation (F) übergeben werden, wobei die Steuerungseinrichtung (15) in einer Startphase vor Beginn des normalen Produktionsbetriebs den zweiten Transportabschnitt (32) bei einer durch die mindestens eine Erfassungseinrichtung (20) detektierten Lücke innerhalb des ersten Transportabschnittes (31) in einen Reversierbetrieb entgegen der Transportrichtung (TR) bis die mindestens eine Erfassungseinrichtung (20) das Signal, dass die Lücke (25) geschlossen ist, an die Steuerungseinrichtung (15) übermittelt oder bis der zweite Transportabschnitt (32) um die gesamte Förderlänge (L32) des zweiten Transportabschnitts (32) zurückbewegt worden ist.

7. Vorrichtung nach Anspruch 6, die zumindest in einem Ubergangsbereich (U) zwischen erstem Transportabschnitt (31) und zweitem Transportabschnitt (32) und/oder in unmittelbarer Nähe des Übergangsbereichs (Ü) und/oder im Bereich des zweiten Transportabschnitt (31) mindestens eine oder jeweils eine Erfassungseinrichtung (20) zur Erfassung der Anordnung der Stückguter (2) auf das Vorhandensein von Lücken (25) zwischen aufeinanderfolgenden Stückgütern (2) der Reihe (1) umfasst.

8. Vorrichtung nach einem der Ansprüche 6 oder 7, bei der die mindestens eine Erfassungseinrichtung (20) oder die Erfassungseinrichtungen (20) durch optische Erfassungseinrichtungen (20), insbesondere durch Lichtschrankeneinheiten (21, 22) und/oder durch Kameras (24, 27) mit Bilderkennungsfunktion, gebildet sind.

9. Vorrichtung nach Anspruch 8, bei der zumindest eine der optischen Erfassungseinrichtungen (20) oder der Lichtschrankeneinheiten (21, 22) parallel zur Transportrichtung (TR) innerhalb eines definierten Verstellweges bewegbar ist und durch Bewegen parallel zur oder entgegen der Transportrichtung (TR) eine Position eines zuvorderst einer Reihe (1) befindlichen Stückgutes (2) und/oder Lücken (25) innerhalb der Reihe (1) detektiert.

10. Vorrichtung nach einem der Ansprüche 6 bis 9, bei der die Transportoberflächen des ersten Transportabschnittes (31) und des zweiten Transportabschnittes (32) jeweils unterschiedliche Haft- und/oder Reibungseigenschaften für die darauf transportierten Stückgüter (2) aufweisen, wobei zwischen der Transportoberfläche des zweiten Transportabschnittes (32) und den Unterseiten der Stückgüter (2) höhere Haftungs- und/oder Reibwerte vorliegen und/oder entstehen als beim ersten Transportabschnitt (31).

11. Vorrichtung nach einem der Ansprüche 6 bis 10, bei der die vom zweiten Transportabschnitt (32) der mindestens einen Transporteinrichtung (3) in einen Erfassungsbereich (4) der Verarbeitungsmodul (18) beförderten Stückgüter (2) dort einzeln oder zu mehreren aus der wenigstens einen geschlossenen Formation (F) der mindestens einen Reihe (1) durch den mindestens einen Manipulator (5) klemmend und/oder kraft- und/oder formschlüssig erfassbar, von den nachfolgenden Stückgütern (2) der Reihe (1) räumlich abtrennbar und in eine definierte relative Zielposition und/oder -ausrichtung gegenüber nachfolgenden Stückgütern (2) der Reihe (1) bringbar sind, wodurch insbesondere eine Lage oder Teillage ausbildbar ist.

## Claims

1. A method for handling piece goods (2) moved one after the other in at least one row (1), in which method:
- the piece goods (2) are transported to a processing module (18) on at least one transport device (3) formed by at least two transport sections (31, 32), which at least two transport sections (31, 32) are adjoining one another in a transport direction (TR) of the piece goods (2),
- wherein, in normal production operation, the piece goods (2) are transported within a row (1) directly one behind the other without spacing or with minimal spacing between each other as a closed formation (F) on the first transport section (31) and on the second transport section (32) of the transport device (3) and are transferred to the subsequent processing module (18) as a closed formation (F),
- wherein, in a starting phase before the start of the normal production operation, an arrangement of the piece goods (2) is detected within the transport device (3) by at least one detection device (20), which at least one detection device (20) is assigned to the first transport section (31), wherein the at least one detection device (20) generates sensor signals and transmits these to a control device (15),
- wherein, after detection of a gap (25) between successive piece goods (2) of the row (1) within the first transport section (31) by the at least one detection device (20), the second transport section (32) is operated by the control device (15) at least for a short time in a reversing mode against the transport direction (TR), until the at least one detection device (20) transmits the signal to the control device (15) that the gap (25) is closed or until the second transport section (32) has been moved back by the entire conveying length (L32) of the second transport section (32).

2. The method according to claim 1, in which at least in a transition region (U) between the first transport section (31) and the second transport section (32) and/or in the immediate vicinity of the transition region (U), in particular in the region of the first transport section (31) and/or in the region of the second transport section (32), an arrangement of the piece goods (2) is detected by at least one or in each case one detection device (20), in particular whereby the presence of piece goods (2) within the transition area (U) and/or within the first transport section (31) and/or the presence of gaps (25) between successive piece goods (2) of the row (1) is being detected.

3. The method according to one of the preceding claims, in which the at least one detection device (20) or the detection devices (20) are formed by optical detection devices (20), in particular by means of light barrier units (21, 22, 23) and/or by means of cameras (24, 27) with image recognition function.

4. The method according to claim 3, in which at least one of the optical detection devices or the light barrier units can be moved parallel to the transport direction (TR) within a defined adjustment path and, by moving parallel to or counter to the transport direction (TR), detects a position of a piece good (2) located at the front of a row (1) and/or detects gaps (25) within the row (1).

5. The method according to one of the preceding claims, in which the piece goods (2) conveyed by the second transport section (32) of the at least one transport device (3) into a seizing range (4) of the grouping module (18) are seized there individually or in groups of several from the at least one closed formation (F) of the at least one row (1) by the at least one manipulator (5) in a clamping and/or force-locking and/or form-locking manner, are spatially separated from the subsequently following piece goods (2) of the row (1) and are brought into a defined relative target position and/or target alignment with respect to subsequent piece goods (2) of the row (1).

6. A device (10) for handling piece goods (2) moved one after the other in at least one row (1), comprising:
- at least one transport device (3) formed by at least two transport sections (31, 32), which are adjoining one another in a transport direction (TR) for transporting the piece goods (2) moved one after the other in at least one row (1) to a processing module (18),
- at least one detection device (20) associated with the first transport section (31) for detecting an arrangement of the piece goods (2) for the presence of gaps (25) between successive piece goods (2) of the row (1), the detection device (20) generating sensor signals and transmitting them to a control device (15),
wherein, in normal production operation, the piece goods (2) are transported within a row (1) without spacing or with minimal spacing directly one after the other as a closed formation (F) on the first transport section (31) and the second transport section (32) of the transport device (3) and are transferred to the subsequent processing module (18) as a closed formation (F),
wherein, in a starting phase before the start of normal production operation, the control device (15) actuates the second transport section (32) in a reversing operation against the transport direction (TR) in the event of a gap detected by the at least one detection device (20) within the first transport section (31) until the at least one detection device (20) transmits the signal that the gap (25) is closed to the control device (15) or until the second transport section (32) has been moved back by the entire conveying length (L32) of the second transport section (32).

7. The device according to claim 6, which comprises at least in a transition region (U) between the first transport section (31) and the second transport section (32) and/or in the immediate vicinity of the transition region (U) and/or in the region of the second transport section (31) at least one or in each case one detection device (20) for detecting the arrangement of the piece goods (2) for the presence of gaps (25) between successive piece goods (2) of the row (1).

8. The device according to one of the claims 6 or 7, in which the at least one detection device (20) or the detection devices (20) are formed by optical detection devices (20), in particular by light barrier units (21, 22) and/or by cameras (24, 27) with image recognition function.

9. The device according to claim 8, in which at least one of the optical detection devices (20) or the light barrier units (21, 22) can be moved parallel to the transport direction (TR) within a defined adjustment path and, by moving parallel to or counter to the transport direction (TR), detects a position of a piece good (2) located at the front of a row (1) and/or detects gaps (25) within the row (1).

10. The device according to one of the claims 6 to 9, in which the transport surfaces of the first transport section (31) and the second transport section (32) each have different adhesive properties and/or frictional properties for the piece goods (2) transported thereon, wherein higher adhesive values and/or friction values are present and/or occur between the transport surface of the second transport section (32) and the bases of the piece goods (2) than in the first transport section (31).

11. The device according to one of the claims 6 to 10, in which the piece goods (2) conveyed by the second transport section (32) of the at least one transport device (3) into the seizing range (4) of the processing module (18) can be seized there individually or in groups of several from the at least one closed formation (F) of the at least one row (1) by the at least one manipulator (5) in a clamping and/or force-locking and/or form-locking manner, can be spatially separated from the subsequently following piece goods (2) of the row (1) and can be brought into a defined relative target position and/or target alignment with respect to subsequent piece goods (2) of the row (1), as a result of which, in particular, a layer or partial layer can be formed.

## Revendications

1. Procédé de manipulation de produits de détail (2) déplacées les uns derrière les autres en au moins une rangée (1), dans lequel procédé:
- les produits de détail (2) sont transportés vers un module de traitement (18) sur au moins un dispositif de transport (3) formé par au moins deux sections de transport (31, 32) se suivant l'une l'autre dans une direction de transport (TR) des produits de détail (2),
- dans lequel, en fonctionnent de production normal, les produits de détail (2) sont transportés, à l'intérieur d'une rangée (1), sans intervalles ou à intervalles minimaux en se suivant directement, en tant que formation fermée (F) sur la première section de transport (31) et la deuxième section de transport (32) du dispositif de transport (3) et sont transférés en tant que formation fermée (F) au module de traitement (18) qui suit,
- dans lequel, dans une phase de démarrage, avant le début du fonctionnement de production normal, à l'intérieur du dispositif de transport (3), un agencement des produits de détail (2) est détecté par au moins un dispositif de détection (20) associé à la première section de transport (31), dans lequel ledit au moins un dispositif de détection (20) génère des signaux de capteur et transmet ceux-ci à un dispositif de commande (15),
- dans lequel, après avoir détecté par ledit au moins un dispositif de détection (20), une lacune (25) entre des produits de détail (2) successifs de la rangée (1) dans la première section de transport (31), le dispositif de commande (15) fait fonctionner la deuxième section de transport (32), au moins pour peu de temps, en un fonctionnement d'inversion à l'encontre de la direction de transport (TR) jusqu'à ce que ledit au moins un dispositif de détection (20) transmette au dispositif de commande (15) le signal indiquant que la lacune (25) est fermée et/ou jusqu'à ce que la deuxième section de transport (32) ait été redéplacée de toute la longueur de transport (L32) de la deuxième section de transport (32).

2. Procédé selon la revendication 1, dans lequel, au moins dans une zone de transition (Ü) entre la première section de transport (31) et la deuxième section de transport (32) et/ou à proximité immédiate de la zone de transition (Ü), en particulier au niveau de la première section de transport (31) et/ou au niveau de la deuxième section de transport (32), un agencement des produits de détail (2) est détecté par au moins un ou respectivement un dispositif de détection (20), dans lequel en particulier la présence de produits de détail (2) dans la zone de transition (Ü) et/ou dans la première section de transport (31) et/ou la présence de lacunes (25) entre des produits de détail (2) successifs de la rangée (1) est détectée.

3. Procédé selon l'une quelconque des revendications précédentes, dans lequel ledit au moins un dispositif de détection (20) ou les dispositifs de détection (20) sont formés par des dispositifs de détection optique (20), en particulier au moyen d'unités de barrage photoélectrique (21, 22, 23) et/ou au moyen de caméras (24, 27) à fonction de reconnaissance d'image.

4. Procédé selon la revendication 3, dans lequel au moins l'un(e) des dispositifs de détection optique ou des unités de barrage photoélectrique peut être déplacé(e) parallèlement à la direction de transport (TR) à l'intérieur d'un chemin de réglage défini et détecte une position d'un produit de détail (2) se trouvant en premier dans une rangée (1) et/ou des lacunes (25) à l'intérieur de la rangée (1) en se déplaçant parallèlement à ou à l'encontre de la direction de transport (TR).

5. Procédé selon l'une quelconque des revendications précédentes, dans lequel les produits de détail (2) transportés par la deuxième section de transport (32) dudit au moins un dispositif de transport (3) dans une zone de saisie (4) du module de groupement (18) y sont saisis par serrage et/ou par adhérence et/ou à engagement positif, soit individuellement soit en groupe, par ledit au moins un manipulateur (5) dans ladite au moins une formation fermée (F) de ladite au moins une rangée (1), sont séparés spatialement des produits de détail (2) suivants de la rangée (1) et sont amenés dans une position cible et/ou orientation cible relative(s) définie(s) par rapport à des produits de détail (2) suivants de la rangée (1).

6. Dispositif (10) de manipulation de produits de détail (2) déplacés les uns derrière les autres en au moins une rangée (1), comprenant:
- au moins un dispositif de transport (3) formé par au moins deux sections de transport (31, 32) se suivant l'une l'autre dans une direction de transport (TR) et destiné à transporter les produits de détail (2) se suivant l'un l'autre en une rangée (1), vers un module de traitement,
- au moins un dispositif de détection (20) associé à la première section de transport (31) et destiné à détecter un agencement des produits de détail (2) quant à la présence de lacunes (25) entre des produits de détail (2) successifs de la rangée (1), dans lequel le dispositif de détection (20) génère des signaux de capteur et transmet ceux-ci à un dispositif de commande (15),
dans lequel, en fonctionnent de production normal, les produits de détail (2) sont transportés, à l'intérieur d'une rangée (1), sans intervalles ou à intervalles minimaux en se suivant directement, en tant que formation fermée (F) sur la première section de transport (31) et la deuxième section de transport (32) du dispositif de transport (3) et sont transférés en tant que formation fermée (F) au module de traitement (18) qui suit,
dans lequel, dans une phase de démarrage avant le début du fonctionnement de production normal, lorsque ledit au moins un dispositif de détection (20) détecte une lacune à l'intérieur de la première section de transport (31), le dispositif de commande (15) fait fonctionner la deuxième section de transport (32) en un fonctionnement d'inversion à l'encontre de la direction de transport (TR), jusqu'à ce que ledit au moins un dispositif de détection (20) transmette au dispositif de commande (15) le signal indiquant que la lacune (25) est fermée ou jusqu'à ce que la deuxième section de transport (32) ait été redéplacée de toute la longueur de transport (L32) de la deuxième section de transport (32).

7. Dispositif selon la revendication 6, qui comprend au moins dans une zone de transition (Ü) entre la première section de transport (31) et la deuxième section de transport (32) et/ou à proximité immédiate de la zone de transition (Ü) et/ou au niveau de la deuxième section de transport (32), au moins un ou respectivement un dispositif de détection (20) destiné à détecter l'agencement des produits de détail (2) quant à la présence de lacunes (25) entre des produits de détail (2) successifs de la rangée (1).

8. Dispositif selon l'une quelconque des revendications 6 ou 7, dans lequel ledit au moins un dispositif de détection (20) ou les dispositifs de détection (20) sont formés par des dispositifs de détection optique (20), en particulier par des unités de barrage photoélectrique (21, 22, 23) et/ou par des caméras (24, 27) à fonction de reconnaissance d'image.

9. Dispositif selon la revendication 8, dans lequel au moins l'un(e) des dispositifs de détection optique (20) ou des unités de barrage photoélectrique (21, 22) peut être déplacé(e) parallèlement à la direction de transport (TR) à l'intérieur d'un chemin de réglage défini et détecte une position d'un produit de détail (2) se trouvant en premier dans une rangée (1) et/ou des lacunes (25) à l'intérieur de la rangée (1) en se déplaçant parallèlement à ou à l'encontre de la direction de transport (TR).

10. Dispositif selon l'une quelconque des revendications 6 à 9, dans lequel les surfaces de transport de la première section de transport (31) et de la deuxième section de transport (32) ont chacune des propriétés d'adhérence et/ou de frottement différentes pour les produits de détail (2) transportés là-dessus, dans lequel les valeurs d'adhérence et/ou de frottement qui sont présentes et/ou produites entre la surface de transport de la deuxième section de transport (32) et les faces inférieures des produits de détail (2) sont supérieures à celles présentes et/ou produites dans le cas de la première section de transport (31).

11. Dispositif selon l'une quelconque des revendications 6 à 10, dans lequel les produits de détail (2) transportés par la deuxième section de transport (32) dudit au moins un dispositif de transport (3) dans une zone de saisie (4) du module de traitement (18) y peuvent être saisis par serrage et/ou par adhérence et/ou à engagement positif, soit individuellement soit en groupe, par ledit au moins un manipulateur (5) dans ladite au moins une formation fermée (F) de ladite au moins une rangée (1), peuvent être séparés spatialement des produits de détail (2) suivants de la rangée (1) et peuvent être amenés dans une position cible et/ou orientation cible relative(s) définie(s) par rapport à des produits de détail (2) suivants de la rangée (1), ce par quoi, en particulier, une couche ou une couche partielle peut être réalisée.
